Europäisches Patentamt

European Patent Office

Office européen des brevets

(19)

(11) **EP 0 744 019 B1**

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(21) Anmeldenummer: **95910390.4**

(22) Anmeldetag: **07.02.1995**

(51) Int. Cl.[7]: **G01J 1/44**, H04B 10/158, B60S 1/08

(86) Internationale Anmeldenummer:
**PCT/DE95/00150**

(87) Internationale Veröffentlichungsnummer:
**WO 95/21371 (10.08.1995 Gazette 1995/34)**

(54) **SCHALTUNGSANORDNUNG ZUM EMPFANGEN VON LICHTSIGNALEN**

CIRCUIT ARRANGEMENT FOR RECEIVING LIGHT SIGNALS

CIRCUIT POUR LA RECEPTION DE SIGNAUX LUMINEUX

(84) Benannte Vertragsstaaten:
**DE ES FR GB**

(30) Priorität: **07.02.1994 DE 4403982**

(43) Veröffentlichungstag der Anmeldung:
**27.11.1996 Patentblatt 1996/48**

(73) Patentinhaber:
**ITT Automotive Europe GmbH**
**60488 Frankfurt (DE)**

(72) Erfinder: **Reime,Gerd**
**D-75328 Schömberg (DE)**

(74) Vertreter:
**Dreiss, Fuhlendorf, Steimle & Becker**
**Postfach 10 37 62**
**70032 Stuttgart (DE)**

(56) Entgegenhaltungen:
**EP-A- 0 666 657          DE-U- 9 309 837**

- **PATENT ABSTRACTS OF JAPAN vol. 14, no. 278 (E-941) 15. Juni 1990 & JP,A,02 087 709 (HITACHI LTD) 28. März 1990**
- **PATENT ABSTRACTS OF JAPAN vol. 11, no. 32 (P-541) 30. Januar 1987 & JP,A,61 202 124 (CANON INC) 6. September 1986**
- **PATENT ABSTRACTS OF JAPAN vol. 6, no. 233 (P-156) 19. November 1982 & JP,A,57 133 325 (MATSUSHITA DENKI SANGYO KK) 18. August 1982**
- **PATENT ABSTRACTS OF JAPAN vol. 13, no. 62 (E-715) 13. Februar 1989 & JP,A,63 250 928 (NEC CORP) 18. Oktober 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Schaltungsanordnung zum Empfangen von Lichtsignalen, die auf einem offenen optischen Weg, das heißt bei Fremdlicht ausgesandt werden. Die Schaltung wird zum Empfangen von Lichtsignalen benutzt, die durch Auswerten der Intensität zum Erkennen von zeitlich begrenzten Veränderungen in der Struktur eines Mediums, das sich im Übertragungsweg befindet, ausgesandt werden. Veränderungen dieser Art können z. B. Wassertropfen sein, die sich in der Luft des optischen Übertragungsweges oder auf einer Glasscheibe, die im Übertragungsweg angeordnet ist, befinden.

Vom Erfinder wurde in der deutschen Gebrauchsmusteranmeldung G 93 09 837.5 eine Anordnung zum Messen oder Erkennen der Benetzung einer, für eine bestimmte Strahlung durchlässigen Wand oder Platte vorgeschlagen. Diese Anordnung kann zum Beispiel zum Erfassen von Wassertropfen dienen, die sich als Niederschlag auf der Scheibe eines Kraftfahrzeuges befinden.
Die Anordnung nutzt eine optische Anordnung mit zwei Licht-Emitter-Dioden, zwischen denen sich ein Lichtsensor befindet, die hinter der Frontscheibe eines Kraftfahrzeuges angeordnet sind. Die Licht-Emitter-Dioden senden im Gegentakt gepulstes Licht aus. Der Lichtsensor empfängt einen Teil des an der Frontscheibe reflektierten Lichtes der Licht-Emitter-Dioden. Die Frontscheibe reflektiert im trockenen Zustand, die im Gegentakt ausgesandten Strahlen annähernd gleich, so daß das empfangene Licht von beiden Licht-Emitter-Dioden in der Schaltungsanodnung, wie Gleichlicht wirkt. Beim Auftreffen von Regentropfen verändern sich unregelmäßig in kurzen Zeitabständen die Reflexionsbedingung und damit die Signal-Beziehung. Es überwiegt der empfangene Lichtanteil einer Licht-Emitter-Diode und im Lichtsensor entsteht ein Wechselstrom im Takt der Pulsfrequenz des Lichtes, das die Licht-Emitter-Dioden aussenden. Diese Änderungen werden ausgewertet.
Bei einer solchen Anordnung, die in einem optisch nicht abgeschirmten Raum betrieben wird, tritt das Problem auf, daß stark wechselndes undefinierbares Umgebungslicht vorhanden ist, das ständig als störendes Licht parasitär auf den Lichtsensor gelangt. Dieses Licht ist in der Regel ein Gleichlicht, z. B. das Licht von der Sonne oder von Glühlampen. Es kann jedoch auch zusätzlich als Wechsellicht empfangen werden, wie das Licht von Gasentladungslampen oder ein durch die Fahrtbewegung des Kraftfahrzeug beinflußtes Gleichlicht. Die Intensität des Umgebungslichtes kann sich bei der Fahrt des Kraftfahrzeuges in rascher Folge undefinierbar ändern, so daß diesem Licht keine zuverlässige Information über die Beschaffenheit des Übertragungaweges, wie z. B. über das Vorhandensein von Regentropfen, entnommen werden kann. Dieses parasitäre Licht wird auch dann, wenn der Lichtsensor mit optischen Filtermitteln ausgerüstet ist, mehr oder minder stark empfangen und in eine entsprechende elektrische Signalkomponente gewandelt. Das gewandelte elektrische Signal besteht deshalb stets aus einer Gleichsignalkomponente, deren Wert in einem großen Bereich schwanken kann und einer überlagerten Wechselsignalkomponente, die das auswertbare Nutzsignal darstellt. Der Pegel der Gleichsignalkomponente kann ein Vielfaches von der Amplitude des Nutzsignals betragen. Parasitäres Licht kann bei starker Intensität den Lichtsensor und/oder den Empfangsverstärker übersteuern. In diesem Fall kann das Nutzsignal nicht ausreichend von der Gleichssignalkomponente getrennt und ausgewertet werden. Deshalb sind Maßnahmen zum Eliminieren des parasitären Lichtes notwendig.

Um diese Maßnahmen zu unterstützen, ist das Licht mit einer Frequenz von ca. 40 kHz getastet. In diesem Frequenzbereich, sind nur unbedeutende Anteile von parasitärem Licht vorhanden.

Ein Lichtempfänger besteht im allgemeinen aus einem Lichtsensor, einem Verstärker, Mitteln zum Unterdrücken der Einflüsse von parasitärem Licht und einem Demodulator zum Rückgewinnen des Signals aus dem gewandelten Fotostrom. Dieses Signal wertet ein Synchrondemodulator aus und erzeugt ein Signal, das z.B. der Häufigkeit von Störstellen im optischen Übertragungsweg entspricht. Als Lichtsensoren werden in der Regel Fotodioden verwendet.

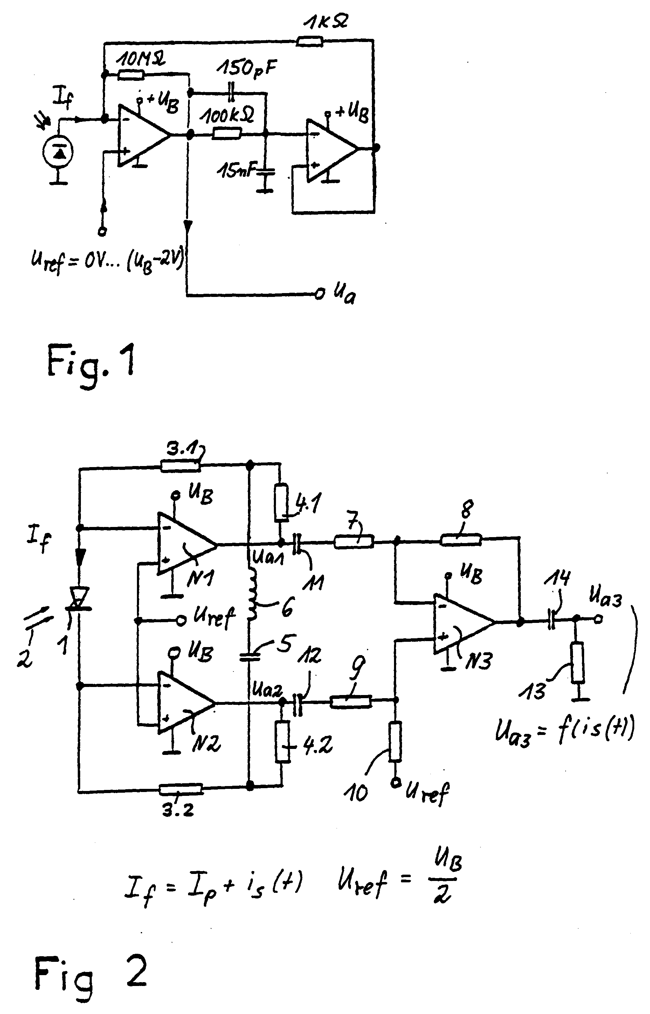

Eine solche Schaltungsanordnung ist aus dem Applikationsbuch: "Linear Circuits Data Book 1992", Volume 1, Operational Amplifiers der Fa. Texas Instruments Incorporated, USA, auf der Seite 2-722, Figur 47 bekannt. Diese Schaltungsanordnung ist zum besseren Verständnis in Figur 1 dargestellt und enthält zwei lineare Qperationsverstärker, für die z. B. ein Präzisions-Doppel-Operationaverstärker in CMOS-Technik vom Typ TLC 27 M 2 verwendet weiden kann.

Die Katode einer Fotodiode ist mit dem invertierenden Eingang eines ersten Operationsverstärkers und die Anode mit der Schaltungsmasse verbunden. Dieser Operationsverstärker ist über eine erste Schleife, die einen hochohmigen Widerstand von z. B. 10 Megaohm enthält, nur gering gegengekoppelt und weist beim Übertragen des Fotostroms einen hohen Strom-Spannungsfaktor auf, um auch bei geringer Helligkeitsamplitude, die das modulierte Signallicht gegenüber dem parasitärem Licht aufweist, eine ausreichende Amplitude des elektrischen Nutzsignals zu erzeugen.

Der nichtinvertierende Eingang des Operationsverstärkers ist mit einer Referenzspannung verbunden, deren Wert zwischen Null und der um zwei Volt reduzierten Betriebsspannung der Schaltung liegen kann. Mit dieser Referenzspannung wird der Arbeitspunkt der Fotodiode unabhängig vom empfangenen Licht in den Sperrbereich gelegt. Dieser Bereich gewährleistet eine ausreichende Übersteuerungsfestigkeit für die Amplitude des modulierten Signallichts.

Das Ausgangssignal des ersten Operationsverstärkers, das zum Auswerten einer entsprechenden Schaltung zugeführt werden muß, wird zusätzlich über eine zweite Schleife, die einen weiteren Operationsverstärker enthält, der mit einem Tiefpaß als nichtinvertierender Gleichspannungsverstärker beschaltet ist, wesentlich stärker als über die erste Schleife durch Gleichspannung gegengekoppelt. Diese Gegenkopplung bewirkt ein Kompensieren des Fotostroms, den das parasitäre Licht in der Fotodiode erzeugt.

Beim Eintreffen von Licht verringert sich entsprechend der Helligkeit der Sperrwiderstand der Fotodiode. Die Änderung des Fotostroms, der über die Gegenkopplung in die Fotodiode fließt, bewirkt im ersten Operationsverstärker ein Ansteigen der Ausgangsspannung. Der Tiefpaß sichert durch seine Funktion als Integrator, daß über die zweite Schleife nur die Gleichspannungskomponente der vom ersten Operationaverstärker erzeugten Ausgangsspannung auf die Katode der Fotodiode zurückgekoppelt wird. Auf diese Weise wird nur der Anteil des von der Fotodiode erzeugten Signalstroms, der von Lichtimpulsen erzeugt wird und deren Frequenz oberhalb der Grenzfrequenz des Tiefpasses liegt, mit einem großen Strom-Spannungsfaktor zum Ausgang der Schaltung übertragen. Der Einfluß von parasitärem Licht wird weitestgehend unterdrückt.

Ein Nachteil dieser Lösung ist jedoch die hochohmige Gegenkopplung des ersten Operationsverstärkers, die zum Erzielen eines hohen Strom-Spannungsfaktors erforderlich ist, um den geringen Anteil des reflektierten Lichts vom Nutzsignals in eine ausreichend hohe Signalspannung zu übertragen. Bei einem ungünstigen Verhältnis von parasitärem Licht zu Signallicht, welches im vorliegenden Fall auftreten kann, ist für eine ausreichende Gleichsignalunterdrückung und Übersteuerungsfestigkeit der Schaltung eine hohe Betriebsspannung erforderlich, die über der Bordspannung eines Kraftfahrzeuges liegen kann. Auf Grund dieser Erfordernisse ist diese bekannte Schaltung wegen zu hohem Betriebsspannungsbedarfs, wegen einer unzureichenden Übertragungsfrequenz und wegen einer hohen Störempfindlichkeit, die Folge der hochohmigen Beschaltung sind, schlecht für die vorgesehene Anwendung geeignet.

Bei einem ungünstigen Verhältnis von Signallicht zu parasitärem Licht muß bei der bekannten Lösung, die Fotodiode mit einer Vorspannung betrieben werden, bei der sie im Sperrbereich arbeitet. In diesem Arbeitsbereich wird nur ein sehr kleiner Signalwechselstrom erzeugt. Deshalb muß der nachfolgende Verstärker eine große Signalempfindlichkeit aufweisen, um den sehr geringen Signalstrom in eine verwertbare Signalspannung zu übertragen.

Für die bekannte Lösung ergibt sich daraus ein weiteres Problem für die geometrische Anordnung von Fotodiode, Signalleitung und Empfangsverstärker. Da die Fotodiode im Sperrbereich einen hohen Innenwiderstand aufweist, der bei einigen Hundert Kiloohm liegen kann, sind viele Teile der Schaltung besonders empfindlich für das Einkoppeln von Störsignalen, wie z. B. Störungen von der Zündung von Kraftfahrzeugen, Netzbrummen, Schaltimpulse und im speziellen Fall für das Einkopplungssignal von den Licht-Emitter-Dioden und anderes, die induktiv und/oder kapazitiv durch Streufelder in die Schaltung gelangen können. Deshalb ist eine elektro-magnetische Abschirmung und ein kompakter Aufbau von Fotodiode und Verstärker notwendig, die dazu führen können, daß selbst die Eintrittsöffnung für das Licht bei der Fotodiode hinter einem Schirm aus feinmaschigem Drahtsieb angeordnet werden muß. Ein solcher kompakter und geschirmter Aufbau ist aufwendig und für die kontruktive und gestalterische Anwendung, z. B, an der Frontscheibe eines Kraftfahrzeuges, sehr hinderlich.

Eine rauscharme fotometrische Schaltung zum Empfangen und Demodulieren von gepulsten Lichtsignalen ist in PATENT ABSTRACTS OF JAPAN, vol. 11, no. 32 (P-541), 30. Januar 1987, Pub.-Nr. JP-A-61 202 124 beschrieben. Bei dieser Schaltung ist eine Fotozelle mit ihren beiden Anschlußpolen mit gleichartigen Signaleingängen zweier Operationsverstärker verbunden, wobei die Ausgangssignale der beiden Verstärker derart über Dioden an die jeweiligen Signaleingänge rückgekoppelt werden, daß der Anteil des Rauschsignals kompensiert und damit der Rauschstrom insgesamt unterdrückt wird.

Aus PATENT ABSTRACTS OF JAPAN, vol. 13, na. 62 (E-715), 13. Februar 1989, Pub.-Nr. JP-A-63 250 928 ist ferner eine gattungsgemäße Schaltungsanordnung zum Empfangen von Lichtsignalen bekannt, bei der die an beiden Anschlußpolen einer Fotozelle abgegriffenen Signale jeweils zunächst einem Vorverstärker (Operationsverstärker OPV) und die so verstärkten Signale danach einem als Differenzverstärker beschalteten OPV zugeführt werden. Die beiden Vorverstärkerzweige sind dabei symmetrisch ausgelegt. Das Signal/Rausch-Verhältnis, bedingt durch thermisches Rauschen, wird bei dieser Schaltung dadurch verbessert, daß die Ausgangssignale der beiden Vorverstärker jeweils gegenphasig sind und daher die empfangenen Lichtsignale mittels des Differenzverstärkers, im Gegensatz zum Rauschsignal, in ihrer Amplitude verdoppelt werden.

Es ist daher Aufgabe der Erfindung eine Schaltung für einen Lichtempfänger anzugeben:

- die ohne aufwendige Filtermittel Signale mit einer relativ hohen Pulsfrequenz (z. B. 40 kHz) selektiert und exakt demoduliert
- die unempfindlich gegen ein hohes Verhältnis der Intensitäten vom parasitären Licht zum Signallicht ist und
- die eine sehr hohe Festigkeit in bezug auf Beeinflussungen durch elektro-magnetische Störfelder aufweist.

Die Schaltung soll im Kraftfahrzeug, in dem bekanntlich starke eletro-magnetische Felder, ständig wechselndes Umgebungslicht, starke Temperaturschwankungen und starke Störungen in der Bordsspannung auftreten können, störungsfrei arbeiten.

Die Aufgabe wird mit den in Anspruch 1 genannten Merkmalen gelöst.

Das Wesen der Erfindung besteht darin, daß für jeden Anschlußpol eines Lichtsensors, insbesondere einer Fotodiode ein gesonderter, gleichartiger Gleichspannungsverstärker als Strom-Spannungswandler vorgesehen ist und daß die Anschlußpole jeweils mit einem gleichartigen, vorzugsweise dem invertierenden Eingang des ihnen zugeordneten Strom-Spannungswandlers verbunden sind, die über identische Gleichstrompfade frequenzabhängig gegengekoppelt sind, wobei die Gleichstrompfade mit den Anschlußpolen des Lichtsensors verbunden sind, so daß dieser von einem gegengekoppelten. Gleichstrom durchflossen wird. Die Gleichstromgegenkopplung ist so stark eingestellt, daß die Gleichspannung über den Anschlußpolen des Lichtsensors unabhängig von der Höhe des Gleichlichtes konstant ist und der Fotostrom, der von diesem Licht erzeugt wird, mit kleinem Strom-Spannungsfaktor übertragen wird.

Die Strom-Spannungswandler sind vorzugsweise mittels eines symmetrischen Filters derart beschaltet, daß pulsierender Fotostrom, der mit einer Frequenz im Bereich der Frequenz des Signallichtes pulsiert, mit einem wesentlich höheren Strom-Spannungsfaktor zu den Ausgängen übertragen wird als der Fotostrom des Gleichlichts, welches im vorliegenden Fall aus einem parasitären niederfrequenten und/oder gleichförmigen Licht und dem Licht besteht, das von den beiden Licht-Emitter-Dioden im trockenen Zustand zu gleichen Teilen im Wechsel ausgesandt wird. Ein symmetrisches Filter garantiert auch im Bereich der Pulsfrequenz des Signallichtes in den Strom-Spannungswandlern gleiche Strom-Spannungsfaktoren. Die Ausgänge der Strom-Spannungswandler, zwischen denen der übertragene Fotostrom in der Form einer gegenphasig pulsierenden Spannung liegt, sind wechselstrommäßig jeweils mit einem Eingang eines Differenzverstärkers verbunden, der die Gleichtaktunterdrückung realisiert und damit alle Gleichtaktstörungen, wie den undefinierbaren Anteil des Gleichlichtes, und elektromagnetisch aufgenommene Störsignale unterdrückt und bevorzugt die Impulsspannung verstärkt.

Die Schaltung weist den Vorteil auf, daß unabhängig von der Höhe des Gleichlichtes bei guter Übersteuerungsfestigkeit und hoher Gleichsignalunterdrückung der Lichtsensor mit einem Arbeitspunkt in der Nähe vom Nullpunkt betrieben werden kann.

In diesem Bereich weisen Fotodioden günstige Eigenschaften als Signalwandler auf, wie mittlere Impedanzwerte, hohe Lichtempfindlichkeit und hohe Übertragungsgeschwindigkeit. Desweiteren ist die Schaltung wegen des nicht auf Masse bezogenen Signalflusses sehr unempfindlich für Einflüsse von elektrischen und magnetischen Störfeldern. Deshalb sind keine Maßnahmen zum Abschirmen und kein gedrängter kompakter Aufbau erforderlich. Der Sensor kann z. B. aus gestalterischen oder konstruktiven Gründen von den Strom-Spannungswandlern abgesetzt betrieben werden, wobei die elektrischen Verbindungen vom Sensor zum Eingang der Strom-Spannungawandler und die Verbindungen vom Lichtsenderausgang zu den Sendedioden in einem gemeinsamen vieradrigen einfach geschirmten Kabel angeordnet werden können.

Die Erfindung wird nachfolgend anhand eines Ausführungsbeispiels näher erläutert. Die Erfindung ist jedoch nicht auf dieses Ausführungsbeispiel beschränkt. Es sind auch noch andere spezielle Ausführungsformen, insbesondere hinsichtlich der Ausführung der einzelnen Verstärkerstufen, möglich und sinnvoll.

Die entsprechenden Zeichnungen zeigen:

Figur 1    eine bekannte Schaltungsanordnung;

Figur 2    eine Schaltungsanordnung gemäß dem Grundprinzip der Erfindung;

Figur 3    eine Ausführungsform der Erfindung bei der die Licht-Emitter-Dioden und der Sensor abgesetzt von der übrigen Elektronik betrieben werden;

In der Figur 2 ist das Grundprinzip der erfinderischen Schaltungsanordnung zum Empfangen und Erkennen von gepulstem Licht schematisch dargestellt.

Ein erster Pol einer Fotodiode 1 zum Empfangen von. Lichtsignalen 2 ist mit dem invertierenden Eingang eines Strom-Spannungswandlers N1 und der andere Pol ist mit dem invertierenden Eingang eines Strom-Spannungswandlers N2 verbunden. Die Strom-Spannungswandler N1 und N2 sind Operationsverstärker, die jeweils mittels eines Gleichstrompfades, der die Widerstände 3.1 und 4.1 bzw. 3.2 und 4.2 enthält, über den invertierenden Eingang identisch gegengekoppelt sind.

Die Gleichstrompfade sind mit einer Serienschaltung aus einem Filterkondensator 5 und einer Induktivität 6 verbunden. Diese bilden mit den Widerständen 3.1, 3.2, 4.1 und 4.2 ein symmetrisches Filter zum Sperren der Frequenz fo des Nutzsignals $U_{a0}$ in den Gegenkopplungszweigen. Auf diese Weise übertragen die Strom-Spannungswandler N1 und N2 den Signalwechselstrom $i_s = f(fo)$ der Fotodiode mit einem wesentlich größeren Strom-Spannungsfaktor als den Gleichstrom $I_p$, den das Gleichlicht erzeugt.

Ein Differenzverstärker N3, der ebenfalls ein Operationsverstärker sein kann und mit den Widerständen 7 bis 10 beschaltet ist, ist über die Kapazitäten 11 und 12 an die Ausgänge der Strom-Spannungswandler N1 und N2 angeschlossen.

Die nichtinvertierenden Eingänge der Strom-Spannungswandler N1 und N2 sind vorteilhaft mit einer gemeinsamen Referenzgleichspannung $U_{ref}$ verbunden, so daß die Fotodiode 1 ohne Vorspannung als Fotoelement betrieben wird und bei Licht einen Fotostrom $I_f$ erzeugt.

Die Schaltung funktioniert wie folgt:

Das gesamte einfallende Licht erzeugt in der Fotodiode 1 einen Fotostrom $I_f = I_p + i_s(t)$. Das heißt, der Fotostrom $I_f$ besteht aus einer Gleichstromkomponente $I_p$, die das Gleichlicht erzeugt und einer Wechselstromkomponente $i_s(t)$, welche der Gleichstromkomponente $I_p$ überlagert ist. Das Licht wird mit einer Pulsfrequenz $fo = 40$ kHz ausgesandt.

Da in der vorgesehen Anwendung der Schaltung bei einer homogenen Struktur des Mediums, das sich im Übertragungsweg befindet, das Licht, das die Licht-Emitter-Dioden 15 und 16 aussenden, in der Fotodiode einen konstanten Fotostrom $I_f$ erzeugt, ist dieses Licht Bestandteil der Gleichstromkomponente $I_p$. Somit ist im vorliegenden Fall die Wechselstromkomponente des Fotostroms $i_s(t) = 0$. Erst bei einer inhomogener Struktur des Mediums, die im Beispiel als regennasse Autoscheibe auftritt, entsteht durch die unterschiedlichen Reflexionsbedingungen des pulsierenden Lichts eine Wechselstromkomponente $i_s(t) > 0$.

Der Fotostrom $I_f$ fließt im Beispiel vom Ausgang des Strom-Spannungswandlers N1 über die Widerstände 3.1 und 4.1, der Fotodiode 1 den Widerständen 3.2 und 4.2 in den Ausgang des anderen Strom-Spannungswandlers N2. Da die Strom-Spannungswandler N1, N2 identisch beschaltet sind, kann die Zuordnung der Anschlußpole zu den Strom-Spannungswandlern N1, N2 beliebig gewählt werden. Die Gleichstromgegenkopplung der Strom-Spannungswandler N1, N2 bewirkt, daß die Spannung über der Fotodiode unabhängig von der Höhe der Gleichstromkomponente $I_p$, in der Nähe von Null bleibt. Das heißt, an den Ausgängen der Strom-Spannungswandler N1, N2 stellen sich infolge der Gleichstromkomponente $I_p$ die Gleichspannungen $U_{a1} = U_{ref} - U_p - u_s(t)$ bzw. $U_{a2} = U_{ref} + U_p + u_s(t)$ ein, die dem Fotostrom entgegenwirken.

Die Widerstände 3.1 bis 4.2 sind so dimensioniert, daß selbst bei sehr starker Gleichstromkomponente $I_p$ und einer geringen Betriebsspannung $U_B$ die Strom-Spannungswandler nicht in die Sättigung gelangen. Die Anordnung von Filterkondensator 5 und Induktivität 6 zwischen den Gleichstrompfaden vergrößert für den pulsierenden Signalstrom $i_s(t)$ den Strom-Spannungsfaktor. Die Ausgangsspannungen $U_{a1}$ und $U_{a2}$ weisen bereits ein wesentlich besseres Verhältnis von Nutzsignal zu Gleichsignal auf als der Fotostrom $I_f$.

Das Signal $U_{a3}$ hinter dem Kondensator 14 am Ausgang des Differenzverstärkers N3 ist von Niederfrequenz- und Gleichstromkomponenten völlig befreit und kann zum Auswerten für einen Synchrondemodulator benutzt werden. Die Schaltungsanordnung kann so konzipiert werden, das z. B. mit einer Betriebsspannung des Kraftfahrzeuges die oben beschriebene Aufgabe gelöst wird.

Die wesentlichen Vorteile der Schaltung sind eine hohe Unterdrückung von Gleichlicht, eine gute Übersteuerungsfestigkeit selbst bei niedriger Betriebsspannung und eine sehr hohe Störfestigkeit in bezug auf elektromagnetische Fremdsignale bei sehr guter Nutzsignalempfindlichkeit, so daß Maßnahmen zum Abschirmen nicht erforderlich sind.

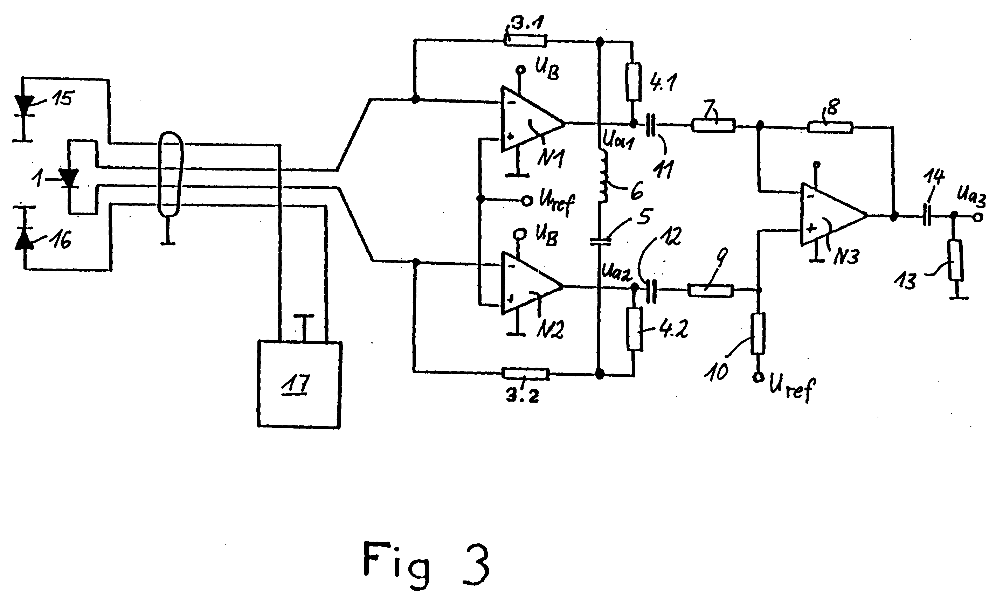

Die Figur 3 zeigt eine spezielle Ausführungsform der Erfindung als Regensensor. Bei dieser Ausführung wird die Fotodiode 1 abgesetzt von der Empfängerschaltung angeordnet. Gemeinsam mit der Fotodiode 1 sind die Licht-Emitter-Dioden 15 und 16 auf der Frontscheibe eines Kraftfahrzeuges angeordnet. Die Licht-Emitter-Dioden 15 und 16 werden aus eine Gegentakt-Impulsgenerator 17 abwechselnd gespeist.

Die Signalzuführungen zur Fotodiode 1 und zu den Licht-Emitter-Dioden können wie dargestellt in eine vierohmigen einfach abgeschirmten Kabel erfolgen, wenn die zwei Zuleitungen zur Fotodiode 1 im Kabel diagonal zu der jeweiligen Zuleitung der Licht-Emitter-Dioden 15 und 16 angeordnet ist.

## Patentansprüche

1. Schaltungsanordnung zum Empfangen und Demodulieren von gepulsten Lichtsignalen, denen Umgebungslicht mit einer undefinierbaren Intensität parasitär überlagert ist, mit einem zweipoligen Lichtsensor (1), der mit Mitteln zum Verstärken von Gleichsignalen verbunden ist, die eine frequenzabhängige Gegenkopplung aufweisen, wobei der Lichtsensor (1) von einem Gegenkopplungsstrom durchflossen wird und die Schaltung für den Signalanteil ($I_p$), den das Umgebungslicht erzeugt, einen hohen Gegenkopplungsfaktor aufweist und damit diesen Signalanteil kompensiert, wobei für jeden Anschlusspol des Lichtsensors (1) ein Strom-Spannungswandler (N1, N2) für Gleichstrom vorhanden ist, wobei jeder Anschlusspol mit einem gleichartigen Signaleingang von einem Strom-Spannungswandler (N1, N2) verbunden ist, wobei die Strom-Spannungswandler (N1, N2) identisches Übertragungsverhalten aufweisen, für die Lichtsignale als verstärkende Filter beschaltet sind, und über den Eingang, an dem sich der Anschlusspol des Lichtsensors (1) befindet, gleichstrommäßig und frequenzabhängig so stark gegengekoppelt sind, dass die Gleichspannung über die Anschlusspole des Lichtsensors (1) unabhängig von der Intensität des parasitären Lichts konstant ist, wobei die Gegenkopplung mittels einer Serienschaltung aus einem Filterkondensator (5) und einer Induktivität (6) zwischen den Rückkopplungspfaden der Stromspannungswandler (N1, N2) erfolgt, und wobei die Ausgänge der Strom-Spannungswandler (N1, N2) wechselstrommäßig jeweils mit einem Eingang eines Differenzverstärkers (N3) verbunden sind.

**2.** Schaltungsanordnung nach Anspruch 1, wobei der Lichtsensor (1) eine Fotodiode ohne Vorspannung ist.

**3.** Schaltungsanordnung nach Anspruch 1, wobei die gleichartigen Signaleingänge der Strom-Spannungswandler (N1, N2) invertierende Eingänge sind.

**4.** Schaltungsanordnung nach Anspruch 1, wobei die Strom-Spannungswandler (N1, N2) und der Differenzverstärker (N3) lineare Operationsverstärker sind.

**5.** Schaltungsanordnung nach Anspruch 1, wobei die frequenzabhängige Gegenkopplung für beide Strom-Spannungswandler (N1, N2) ein symmetrisches Filter ist.

**6.** Schaltungsanordnung nach Anspruch 1, wobei die Strom-Spannungswandler (N1, N2) und der Differenzverstärker (N3) lineare Operationsverstärker sind, die auf einem Schaltungschip enthalten sind.

**Claims**

**1.** Circuit arrangement for receiving and demodulating pulsed light signals, to which ambient light of an undefinable intensity is superimposed in a parasitic manner, with a two-pole light sensor (1), which is connected to means for amplifying equisignals, which means have a frequency-dependent negative feedback, wherein a negative feedback current lows through the light sensor (1), and the circuit has a high negative feedback factor for the signal component ($I_p$) generated by the ambient light and thus compensates this signal component, wherein a current-voltage converter (N1, N2) for direct current is present for each terminal pole of the light sensor (1), wherein each terminal pole is connected to an identical signal input of a current-voltage converter (N1, N2), wherein the current-voltage converters (N1, N2) have an identical transmission behavior, are wired as amplifying filters for the light signals, and are fed back negatively so strongly in terms of direct current and as a function of the frequency via the input at which the terminal pole of the light sensor (1) is located that the d.c. voltage over the terminal poles of the light sensor (1) is constant regardless of the intensity of the parasitic light, wherein the negative feedback is realized by a series connection of a filter capacitor (5) and an inductance (6) between the negative feedback path of the current-voltage converters (N1, N2), and wherein the outputs of the current-voltage converters (N1, N2) are connected in terms of alternating current to a respective input of a differential amplifier (N3).

**2.** Circuit arrangement in accordance with claim 1, characterized in that the light sensor (1) is a photodiode without bias voltage.

**3.** Circuit arrangement in accordance with claim 1, characterized in that the identical signal inputs of the current-voltage converters (N1, N2) are inverting inputs.

**4.** Circuit arrangement in accordance with claim 1, characterized in that the current-voltage converters (N1, N2) and the differential amplifier (N3) are linear operational amplifiers.

**5.** Circuit arrangement in accordance with claim 1, characterized in that the frequency-dependent negative feedback for both current-voltage converters (N1, N2) is a symmetrical filter.

**6.** Circuit arrangement in accordance with claim 1, characterized in that the current-voltage converters (N1, N2) and the differential amplifier (N3) are linear operational amplifiers, which are contained on one circuit chip.

**Revendications**

**1.** Circuit de réception et de démodulation de signaux lumineux pulsés, auxquels de la lumière ambiante ayant une intensité indéfinissable est superposée de manière parasite, comprenant un capteur de lumière bipolaire (1) qui est connecté à des moyens d'amplification de signaux constants, qui sont soumis à une contre-réaction en fonction de la fréquence, le capteur de lumière (1) étant parcouru par un courant de conte-réaction et le circuit présentant, pour la fraction de signal ($I_p$), qui est produit par la lumière ambiante, un facteur de contre-réaction élevé et compensant par suite cette fraction de signal, circuit dans lequel il y a pour chaque pôle de connexion du capteur de lumière (1) un convertisseur courant-tension (N1, N2) pour le courant continu, chaque pôle de connexion est connecté à une entrée de signal identique d'un convertisseur courant-tension (N1, N2), les convertisseurs courant-tension (N1, N2) présentent un comportement de transmission identique, sont connectés pour les signaux lumineux en tant que filtres d'amplification et sont soumis à une forte contre-réaction par l'entremise de l'entrée, où le pôle de connexion du capteur de lumière (1) se trouve, en courant continu et en fonction de la fréquence de telle sorte que la tension continue passant par le pôle de connexion du capteur de lumière (1) soit en permanence indépendante de l'intensité de la lumière parasite, la contre-réaction se fait au moyen d'un circuit sériel constitué d'un condensateur de filtrage (5) et d'une induction (6) entre les bus de contre-réaction des convertisseurs courant-tension (N1, N2), et les sorties des convertisseurs courant-tension (N1, N2) sont connectées en courant alternatif respectivement à une entrée d'un amplificateur différentiel (N3).

2. Circuit selon la revendication 1, dans lequel le capteur de lumière (1) est une photodiode sans tension préalable.

3. Circuit selon la revendication 1, dans lequel les entrées de signaux identiques des convertisseurs courant-tension (N1, N2) sont des entrées inverseuses.

4. Circuit selon la revendication 1, dans lequel les convertisseurs (N1, N2) et l'amplificateur différentiel (N3) sont des amplificateurs opérationnels linéaires.

5. Circuit selon la revendication 1, dans lequel la contre-réaction en fonction de la fréquence pour les deux convertisseurs courant-tension (N1, N2) est effectuée par un filtre symétrique.

6. Circuit selon la revendication 1, dans lequel les convertisseurs courant-tension (N1, N2) et l'amplificateur différentiel (N3) sont des amplificateurs opérationnels linéaires, qui sont portés sur une puce de connexion.

Fig. 1

$$I_f = I_p + i_s(t) \qquad U_{ref} = \frac{U_B}{2}$$

Fig 2

Fig 3

EP 0 744 019 B1